# EUROPÄISCHE PATENTSCHRIFT

(11) **EP 1 965 087 B1**
(45) Veröffentlichungstag und Bekanntmachung des Hinweises auf die Patenterteilung: **18.05.2011**
(21) Anmeldenummer: 08152037.1
(22) Anmeldetag: 28.02.2008
(51) Int. Cl.: F16B 25/00

(54) **Schraube mit einem gewindeformenden Gewinde, Rohling zur Herstellung der Schraube und Schraubverbindung**
Screw with a thread-forming thread, blank for manufacturing the screw and screw connector
Vis dotée d'un filetage formant un filetage, ébauche de fabrication de la vis et raccordement de vis

(30) Priorität: 28.02.2007 DE 102007010221
(43) Veröffentlichungstag der Anmeldung: 03.09.2008
(73) Patentinhaber: Baier & Michels GMBH und CO. KG., 64372 Ober-Ramstadt/Rohrbach (DE)
(72) Erfinder: Ambros, Olaf, 68647 Biblis (DE)
(74) Vertreter: Sommer, Peter

(56) Entgegenhaltungen:
- EP-A- 0 004 541
- US-A- 3 537 288
- US-A- 6 089 986
- US-A1- 2004 033 122

## Beschreibung

### Technisches Gebiet

Die Erfindung betrifft eine Schraube mit einem gewindeformenden Gewinde zur Erzeugung eines metrischen Gewindes, umfassend einen tragenden Gewindeabschnitt und einen sich zur Schraubenspitze hin verjüngenden formgebenden Gewindeabschnitt sowie einen Rohling zur Herstellung der Schraube und eine Schraubverbindung mit dieser Schraube (EP 0 004 541 A1).

### Stand der Technik

Bekannte gewindeformende Schrauben haben eine sich im Durchmesser verjüngende Schraubenspitze mit einen Kegelwinkel, wobei das Gewinde im verjüngten Bereich unvollständig ausgebildet ist.

Nachteilig hierbei ist, dass zum Ansetzten der Schraube eine große Axialkraft aufgebracht werden muss, um ein Abgleiten zu verhindern und um das Gewinde im Mutternteil zu formen.

### Darstellung der Erfindung

Eine erfindungsgemäße Schraube weist die Merkmale des Anspruchs 1 auf unter Anderem mit einem gewindeformenden Gewinde, das nach dem Einfurchen in das zu verschraubende Bauteil in diesem ein metrisches Gewinde erzeugt, umfasst einen tragenden Gewindeabschnitt und einen sich zur Schraubenspitze hin verjüngenden formgebende Gewindeabschnitt, wobei die Gewindegänge des sich verjüngenden Gewindeabschnitts scharfkantig und vollständig ausgebildet sind. Das Gewinde kann dabei bis zur Spitze voll ausgeprägt sein, also die volle Profiltiefe aufweisen und die Gewindespitzen weisen keine Unterfüllung auf.

Ein erfindungsgemäßer Rohling umfasst die Merkmale des Anspruchs 9.

Eine erfindungsgemäße Schraubverbindung umfasst eine selbstformende Schraube und ein eine Öffnung zur Aufnahme der selbstformende Schraube aufweisendes Mutternteil. Der Öffnungsdurchmesser C im Mutternteil ist größer als der Gewindedurchmesser A an der Schraubenspitze, wobei der Kernlochdurchmesser C kleiner als ein Gewindedurchmesser B am Übergang eines ersten sich gegenüber dem metrischen Bereich verjüngenden Teilbereichs und dem sich daran anschließenden zweiten, sich gegenüber dem ersten Teilbereich weiter verjüngenden Teilbereich ist.

Weitere Ausgestaltungen ergeben sich aus den Unteransprüchen.

### Kurzbeschreibung der Zeichnung

Die erfindungsgemäße Schraube wird anhand der Zeichnung erläutert. Es zeigt:
- Fig. 1: eine erfindungsgemäße Schraube,
- Fig. 2: die Schraube aus Fig. 1 im Detail,
- Fig. 3: ein Detail eines Gewindeauslaufs der Spitze,
- Fig. 4: einen Rohling für die Herstellung der Schraube aus Fig. 1,
- Fig. 5: eine Schraubverbindung mit der Schraube aus Fig. 1 und mit einem Mutternteil.

### Ausführungsbeispiel

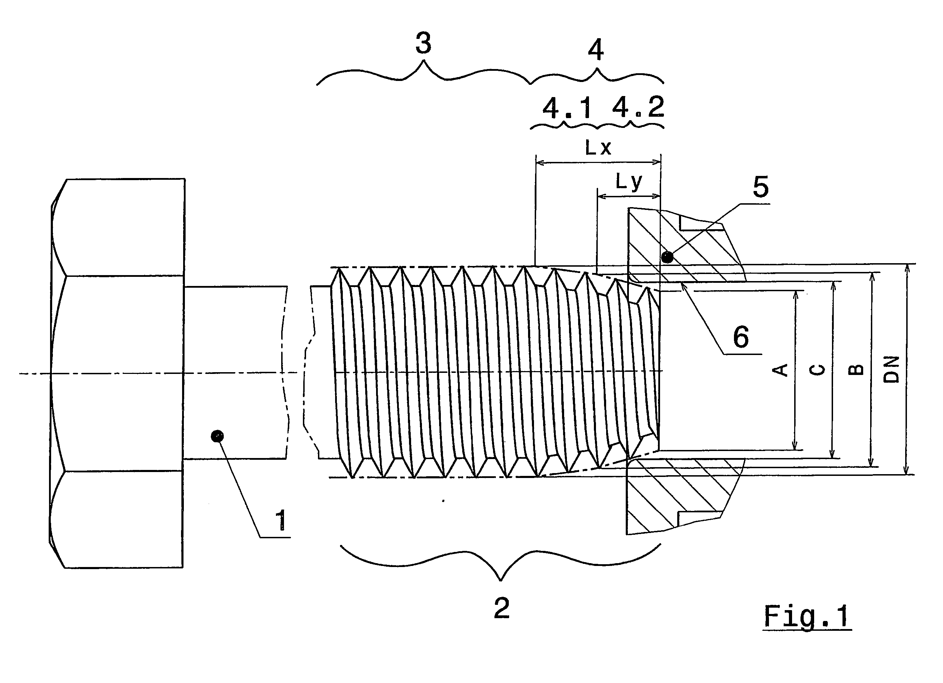

In Fig. 1 ist eine Schraube 1 mit einem gewindeformenden Gewinde 2 dargestellt. Das Gewinde 2 umfasst einen zylindrischen Gewindeabschnitt 3 mit einem metrischen Gewinde und einen sich zur Schraubenspitze hin verjüngenden Gewindeabschnitt 4 mit einer von der Schraubenspitze her gesehenen Länge Lₓ, der in einem Bereich einer Länge L_{y} in ein als Mutternteil 5 bezeichnetes zu verschraubendes Bauteil mit einer Öffnung 6 eintaucht. Auch andere als zylindrische Querschnitte kommen in Betracht, insbesondere ein trilobularer Querschnitt, der besondere Vorteil eines abgestuften Kegels für das Ansetzen und das Einformen wird dort aber bereits auf anderer Weise erreicht.

Die Gewindegänge des sich verjüngenden Gewindeabschnitts 4 sind scharfkantig ausgebildet und tragen zur Formung des Gewindes bei, sobald sie in das Mutternteil 5 eingreifen.

Die Steigung des Gewindes im sich verjüngenden Gewindeteil 4 entspricht der des metrischen Gewindeteils 3, lediglich der Durchmesser ist vom Gewindenenndurchmesser D_{N} auf einen Enddurchmesser A verringert.

Durch das scharfkantige und voll ausgeprägte Gewinde ist das Ansetzten der Schraube 1 am Mutternteil 5 und der Beginn des Einformens des im Eingriff stehenden Gewindegangs leichter als bei einer abgestumpften Gewindespitze.

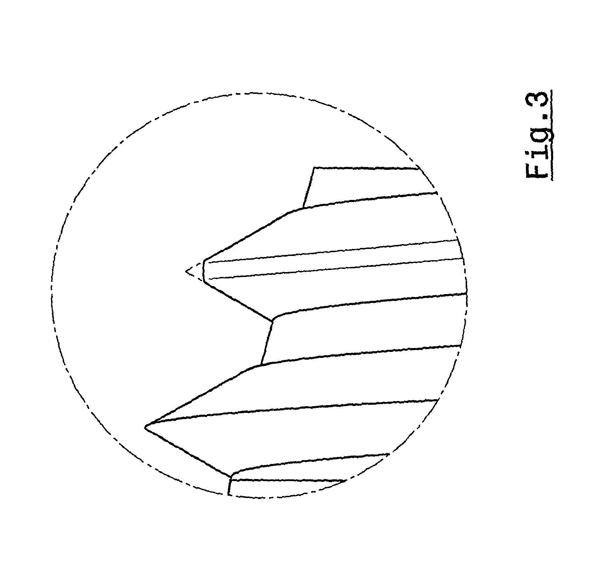

An der Mutternteil 5 zugewandten Spitze der Schraube 1 kann ein in Fig. 3 dargestellter Gewindeauslauf vorgesehen sein, der sich über höchstens einen Gewindegang erstreckt und dessen Gewindegang zumindest teilweise abgestumpft ist, etwa durch nicht vollständiges Ausprägen.

Der sich verjüngende Gewindebereich 4 weist eine Länge Lx des 0,6-fachen bis 1-fachen Gewindenenndurchmessers D_{N} auf.

Dadurch ergibt sich ein Verhältnis von der Länge Lₓ zur Steigung von 4 bis 5, vorzugsweise 4 ²/₃.

In dem sich verjüngenden Gewindeabschnitt kann ein sich gegenüber dem geraden Gewindebereich 3 verjüngender erster Teilbereich 4.1 und ein sich gegenüber dem ersten Teilbereich 4.1 sich zum Schraubenende hin weiter verjüngender zweiter Teilbereich 4.2 vorgesehen sein. Dadurch ist in einem Abstand L_{y} zur Schraubenspitze ein Übergang mit einem Durchmesser B vorhanden, der zwischen dem Spitzendurchmesser A und dem Gewindenenndurchmesser D_{N} liegt.

Der zweite Teilbereich 4.2 kann sich über eine Länge Ly des 0,4 bis 0,5-fachen der gesamten Länge Lx des sich verjüngenden Gewindeabschnitts 4 erstrecken. Insbesondere geeignet ist eine Länge L_{y}, die dem Doppelten der Steigung p entspricht, also zwei vollständigen Gewindegängen.

Am Ende des zweiten Teilbereichs 4.2 und somit an der Schraubenspitze kann ein Gewindedurchmesser A vom 0,6 bis 0,8-fachen Gewindenenndurchmesser D_{N} des geraden Gewindebereichs 3 vorliegen.

Am Übergang vom ersten zum zweiten Teilbereich 4.1, 4.2 kann ein Gewindedurchmesser B vom 1,2 bis 1,5-fachen des Spitzendurchmessers A an der Schraubenspitze vorliegen, wobei der Durchmesser B aber stets zwischen dem Spitzendurchmesser A und dem Gewindenenndurchmesser D_{N} liegt.

Der Gewindedurchmesser B am Übergang zwischen dem ersten und zweiten Teilbereich 4.1, 4.2 ist größer als ein Kernlochdurchmesser C eines Kernlochs 6 eines Mutternteils 5, in das ein metrisches Gewinde als Innengewinde eingeformt werden soll. Der Kernlochdurchmesser C befindet sich in einem zylindrischen Teil des Kernlochs 6.

Der Kernlochdurchmesser C entspricht näherungsweise dem Flankendurchmesser des zu erzeugenden Gewindes.

Der sich verjüngende erste Teilbereich 4.1 kann einen Winkel Alpha zwischen 5 und 10 Grad gegenüber der Schraubenachse aufweisen, insbesondere 7,5 Grad, und der zweite Teilbereich kann einen Winkel Beta von 10 bis 20 Grad gegenüber der Schraubenachse aufweisen, insbesondere 15 Grad

Da für die Gestaltung nur drei bis fünf Gewindegänge zur Verfügung stehen, reicht eine Verjüngung durch zwei Kegelwinkel in der Regel aus.

Das Gewinde der Schraube kann im sich verjüngenden Gewindebereich 4 einen sich gegenüber dem Grundkerndurchmesser K_{N} im zylindrischen Bereich verjüngenden Kerndurchmesser K aufweisen, wobei sich der Kerndurchmesser K insbesondere entsprechend der Verjüngung des Gewindedurchmessers verjüngt. Das führt zu einer konstanten Gewindetiefe selbst bei verjüngten Kerndurchmesser.

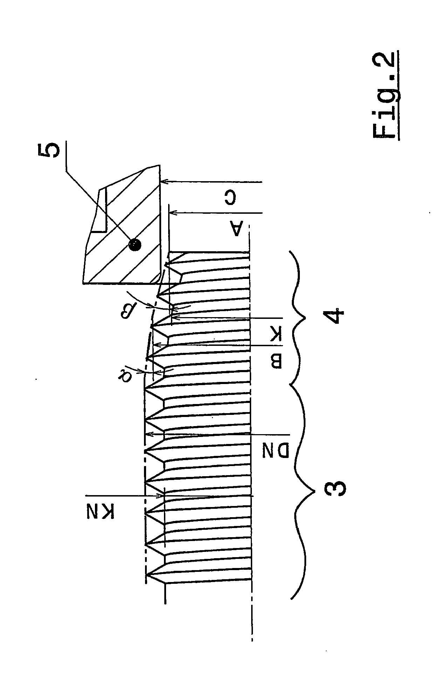

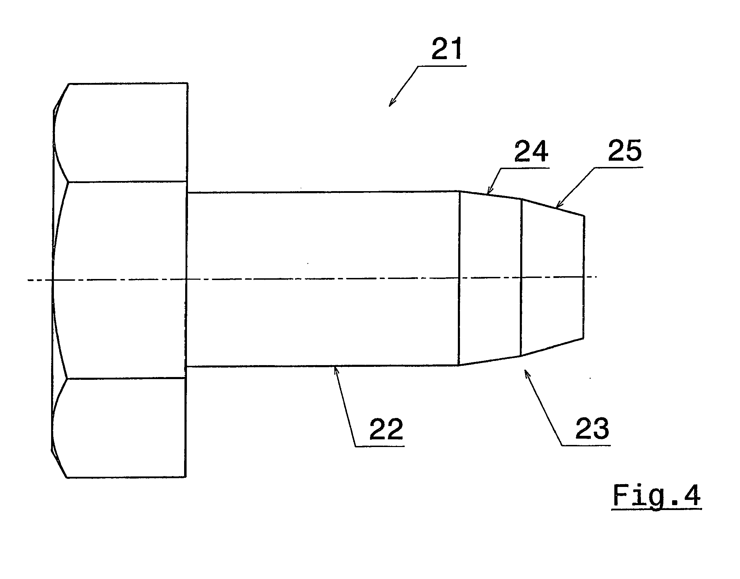

Die in den Fig. 1 und 2 dargestellte Schraube kann aus einem Rohling 21 gemäß Fig. 4 durch Walzen hergestellt worden sein. Der Rohling 21 umfasst einen mit einem Gewinde zu versehenden Schaft 22, der zu seiner Spitze hin einen sich verjüngenden Schaftbereich 23 aufweist. Dieser sich verjüngende Schaftbereich 23 kann in einen ersten und in einen zweiten Teilbereich 24, 25 unterteilt sein, wobei der erste Teilbereich 24 zum nicht verjüngten Bereich des Schafts 22 hin angeordnet ist und der zweite Teilbereich 25 am ersten Teilbereich 24 zur Rohlingsspitze hin angeordnet ist. Beide Teilbereiche 24, 25 sind konisch ausgebildet, wobei der Konuswinkel des zur Rohlingsspitze hin angeordneten Teilbereichs aufweist. Als Konuswinkel kommen hier Winkel von 7° - 20° für den ersten Teilbereich 24 und 10° - 40° für den zweiten Teilbereich 25 in Betracht.

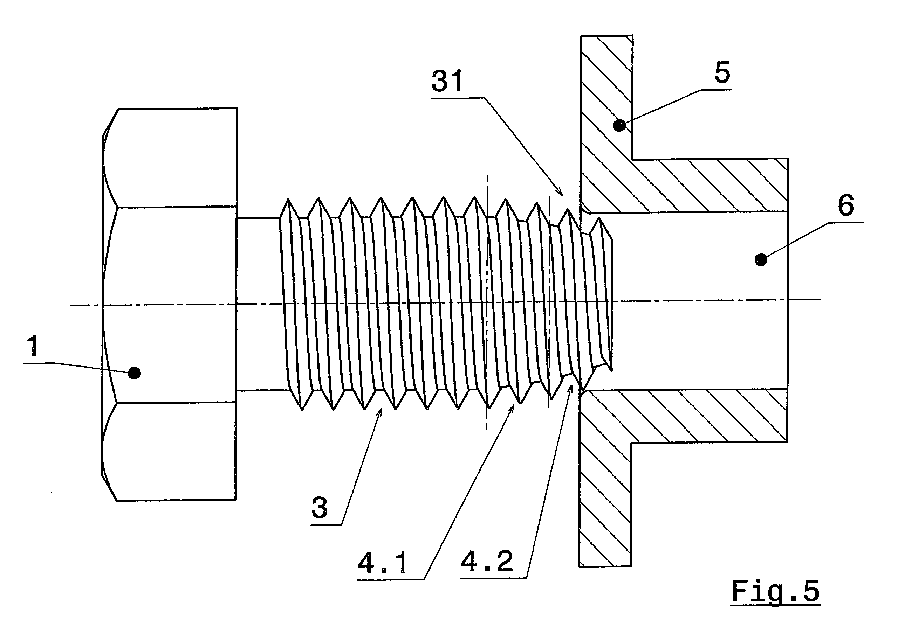

Die in Fig. 5 dargestellte Schraubverbindung 31 umfasst die gewindeformende Schraube 1 und ein eine Öffnung 6 zur Aufnahme der Schraube aufweisendes Mutternteil 5 nach Fig. 1. Der Kernlochdurchmesser C der Öffnung 6 im Mutternteil 5 ist größer als der Durchmesser A am Schraubenende, wobei der Kernlochdurchmesser C aber kleiner als ein Gewindedurchmesser B am Übergang eines ersten, sich gegenüber dem metrischen Bereich 3 verjüngenden Teilbereichs 4.1 und einem sich daran anschließenden zweiten, sich gegenüber dem ersten Teilbereich 4.1 weiter verjüngenden Teilbereich 4.2 ist.

Mit einer erfindungsgemäßen Schraube 1 lässt sich ein schneller kraftschlüssiger Eingriff in das Mutternteil 5 herstellen. Sofort nach dem Eingriff des Gewindes werden die beim weiteren Eindrehen entstehenden Axialkräfte im wesentlichen von dem bereits im Mutternteil 5 geformten Gewindestück aufgenommen, sodass für die weitere Einbringung des Gewindes und die anschließende Verschraubung im geraden Gewindeabschnitt vom Schraubantrieb lediglich Radialkräfte erzeugt werden müssen.

Gegenüber trilobularen Schrauben hat eine Schraubverbindung mit einem selbstgeformten zylindrisches Gewinde den Vorteil, dass das Gewinde gegenüber Gasen und Flüssigkeiten dicht ist, zumindest bei kleinen Druckdifferenzen.

## Patentansprüche

1. Schraube (1) mit einem gewindeformenden Gewinde (2) zur Erzeugung eines metrischen Gewindes, umfassende einen tragenden Gewindeabschnitt (3) und einen sich zur Schraubenspitze hin verjüngenden formgebenden Gewindeabschnitt (4), wobei die Gewindegänge des sich verjüngenden Gewindeabschnitts (4) scharfkantig und vollständig ausgebildet sind, **dadurch gekennzeichnet, dass** der sich verjüngende Gewindebereich (4) eine Länge Lx des 0,6-fachen bis 1-fachen Gewindenenndurchmessers D_{N} aufweist, dass in dem sich verjüngenden Gewindeabschnitt (4) ein sich gegenüber dem metrischen Gewindebereich verjüngender erster Teilbereich (4.1) und ein sich gegenüber dem ersten Teilbereich (4.1) sich zum Schraubenende hin weiter verjüngender zweiter Teilbereich (4.2) vorgesehen ist, dass sich der zweite Teilbereich (4.2) über eine Länge Ly des 0,4 bis 0,5-fachen der Länge Lx des sich verjüngenden Gewindeabschnitts (4) erstreckt und dass der sich verjüngende erste Teilbereich (4.1) einen Winkel (Alpha) zwischen 5 und 10 Grad gegenüber der Schraubenachse aufweist und dass der zweite Teilbereich einen Winkel (Beta) von 10 bis 20 Grad gegenüber der Schraubenachse aufweist.

2. Schraube nach Anspruch 1, **dadurch gekennzeichnet, dass** an der Schraubenspitze ein Gewindeauslauf vorgesehen ist, der sich über höchstens eine Steigung erstreckt und dessen Gewindegang zumindest teilweise abgestumpft ist.

3. Schraube nach Anspruch 1 oder 2, **dadurch gekennzeichnet, dass** am Ende des zweiten Teilbereichs (4.2) und somit am Schraubenende ein Gewindedurchmesser A vom 0,6 bis 0,8-fachen Gewindenenndurchmesser D_{N} des metrischen Gewindebereichs (3) vorliegt.

4. Schraube nach Anspruch 3, **dadurch gekennzeichnet, dass** am Übergang vom ersten zum zweiten Teilbereich (4.1, 4.2) ein Gewindedurchmesser B von 1,2 bis 1,5-fachen des Gewindedurchmessers A am Schraubenende aufweist.

5. Schraube nach einem der Ansprüche 1 bis 4, **dadurch gekennzeichnet, dass** der Gewindedurchmesser B am Übergang zwischen dem ersten und zweiten Teilbereich (4.1, 4.2) größer als ein Kernlochdurchmesser C eines dem zu erzeugenden metrischen Gewinde entsprechenden Innengewindes.

6. Schraube nach einem Ansprüche 1 bis 5, **dadurch gekennzeichnet, dass** sich im verjüngten Gewindebereich (4) der Kerndurchmesser K verjüngt, insbesondere entsprechend der Verjüngung des Gewindedurchmessers.

7. Schraube nach einem der Ansprüche 1 bis 6, **dadurch gekennzeichnet, dass** es sich um ein zylindrisches Gewinde handelt.

8. Schraubverbindung (31), umfassend eine gewindeformende Schraube (1) nach einem der Ansprüche 1 bis 7 und eine Öffnung zur Aufnahme der gewindeformenden Schraube aufweisendes Mutternteil (5), **dadurch gekennzeichnet, dass** der Öffnungsdurchmesser C im Mutternteil (5) größer als der Gewindedurchmesser A am Schraubenende ist, wobei der Kernlochdurchmesser C kleiner als ein Gewindedurchmesser B am Übergang eines ersten sich gegenüber dem metrischen Bereich verjüngenden Teilbereichs (4.1) und dem sich daran anschließenden zweiten, sich gegenüber dem ersten Teilbereich (4.1) weiter verjüngenden Teilbereich (4.2)ist.

9. Rohling (21) zur Herstellung einer Schraube nach einem der Ansprüche 1 bis 7, umfassend einen mit einem Gewinde zu versehenden Schaft (22), **dadurch gekennzeichnet, dass** der Schaft (22) zu seinem Ende hin einen sich verjüngenden Schaftbereich (23) aufweist, wobei der sich verjüngende Schaftbereich (23) in einen ersten und in einen zweiten Teilbereich (24, 25) unterteilt ist, wobei der erste Teilbereich (24) zum nicht verjüngten Bereich des Schafts (22) hin angeordnet ist und der zweite Teilbereich (25) am ersten Teilbereich (24) zur Rohlingsspitze hin angeordnet ist und dass beide Teilbereiche konisch ausgebildet sind, wobei der Konuswinkel zur Rohlingsspitze hinweist und ein Winkel von 7°-20° für den ersten Teilbereich und von 10°-40° für den zweiten Teilbereich vorliegt.

## Claims

1. A screw (1) having a thread-forming thread (2) for the production of a metric thread, comprising a load-bearing thread portion (3) and a shaping thread portion (4) tapering toward the screw tip, the thread turns of said tapered thread portion (4) being sharp-edged and complete, **characterized in that** said tapered thread region (4) has a length Lx which is from 0.6 to 1 times the thread's nominal diameter D_{N}, that in said tapered thread portion (4) there is provided a first subregion (4.1), which taperd relatively to said metric thread region, and a second subregion (4.2), which tapers further relatively to said first subregion (4.1) toward the end of said screw, that said second subregion (4.2) extends over a length Ly equal to from 0.4 to 0.5 times the length Lx of said tapered thread portion (4), that said tapered first subregion (4.1) exhibits an angle (alpha) of between 5 ° and 10 ° relative to the screw axis, and that said second subregion exhibits an angle (beta) of from 10 ° to 20 ° relative to the screw axis.

2. The screw as defined in claim 1, **characterized in that** there is provided at the screw tip a thread run-out, which extends over not more than one pitch and the screw pitch of which is at least partially truncated.

3. The screw as defined in claim 1 or claim 2, **characterized in that** at the end of said second subregion (4.2) and thus at the end of the screw, the thread diameter A is from 0.6 to 0.8 times the nominal thread diameter D_{N} of the metric thread region (3).

4. The screw as defined in claim 3, **characterized in that** at the transition from said first to said second subregion (4.1, 4.2), said screw has a thread diameter B equal to from 1.2 to 1.5 times the thread diameter A at the end of the screw.

5. The screw as defined in any one of claims 1 to 4, **characterized in that** said thread diameter B at the transition between said first and said second subregion (4.1, 4.2) is greater than a core hole diameter C of a female thread corresponding to the metric thread to be produced.

6. The screw as defined in any one of claims 1 to 5, **characterized in that** within said tapered thread region (4) the core diameter K tapers, more particularly so as to correspond to the taper of the thread diameter.

7. The screw as defined in any one of claims 1 to 6, **characterized in that** it has a cylindrical thread.

8. A screw joint (31), comprising a thread-forming screw (1) as defined in any one of claims 1 to 7 and a female element (5) comprising a hole for the accommodation of said thread-forming screw, **characterized in that** the diameter C of said hole in said female element (5) is larger than said thread diameter A at the end of said screw, and said core hole diameter C is smaller than a thread diameter B at the transition between a first subregion (4.1) tapering relatively to said metric region and the adjoining, second subregion (4.2) further tapering relatively to said first subregion (4.1).

9. A blank (21) for the production of a screw as defined in any one of claims 1 to 7, comprising a shaft (22) to be provided with a thread, **characterized in that** said shaft (22) comprises a shaft region (23) tapering toward its end, and said tapered shaft region (23) is divided into first and second subregions (24, 25), said first subregion (24) being disposed next to the untapered portion of said shaft (22) and said second subregion (25) being disposed next to said first subregion (24) and extending toward the tip of the blank and that both subregions are of a conical shape, and the angles of taper point toward the tip of said blank and the angle is from 7 ° to 20 ° over said first subregion and from 10 ° to 40 ° over said second subregion.

## Revendications

1. Vis (1) comportant un filet (2) formant un filetage pour créer un filet métrique, comprenant une section filetée porteuse (3) et une section filetée (4) créant la forme se rétrécissant en direction de la pointe de la vis, les pas de vis de la section filetée se rétrécissant (4) ayant des arêtes aiguës et une conformation intégrale, **caractérisée en ce que** la zone filetée (4) se rétrécissant présente une longueur Lx représentant 0,6 à 1 fois le diamètre nominal de filetage D_{N}, que, dans la section se rétrécissant (4), une première sous-section (4.1) se rétrécissant par rapport à la zone filetée métrique et une seconde sous-section (4.2) se rétrécissant encore plus que la première sous-section (4.1) en direction de l'extrémité de la vis sont prévues, que la seconde sous-section (4.2) s'étend une longueur Ly représentant 0,4 à 0,5 fois la longueur Lx de la section filetée se rétrécissant (4) et que la première sous-section se rétrécissant (4.1) décrit un angle (alpha) de 5 à 10 degrés par rapport à l'axe de la vis et que la seconde sous-section (4.2) décrit un angle (bêta) de 10 à 20 degrés par rapport à l'axe de la vis.

2. Vis selon la revendication 1, **caractérisée en ce qu'**il est prévu au niveau de la pointe de la vis une fin de filet qui s'étend au plus sur une pente et dont le pas de vis est du moins partiellement tronqué.

3. Vis selon la revendication 1 ou 2, **caractérisée en ce que**, au bout de la seconde sous-section (4.2) et ainsi à l'extrémité de la vis, on a un diamètre de filetage A représentant 0,6 à 0,8 fois le diamètre nominal de filetage D_{N} de la zone filetée métrique (3).

4. Vis selon la revendication 3, **caractérisée en ce que**, à la transition de la première à la seconde sous-section (4.1, 4.2), on a un diamètre de filetage B représentant 1,2 à 1,5 fois le diamètre de filetage A à l'extrémité de la vis.

5. Vis selon une des revendications 1 à 4, **caractérisée en ce que** le diamètre de filetage B à la transition entre la première et la seconde sous-sections (4.1, 4.2), est supérieur à un diamètre de trou central C d'un filetage intérieur correspondant au filetage métrique à créer.

6. Vis selon une des revendications 1 à 5, **caractérisée en ce que**, dans la zone filetée se rétrécissant (4), le diamètre central K se rétrécit, en particulier suivant le rétrécissement du diamètre de filetage.

7. Vis selon une des revendications 1 à 6, **caractérisée en ce qu'**il s'agit d'un filetage cylindrique.

8. Raccord vissé (31) présentant une vis formant un filet (1) selon une des revendications 1 à 7 et un élément écrou (5) présentant un orifice destiné à recevoir la vis formant un filet, **caractérisé en ce que** le diamètre de l'orifice C de l'élément écrou (5) est supérieur au diamètre de filetage A à l'extrémité de la vis, le diamètre de trou central C étant inférieur à un diamètre de filetage B à la transition entre une première sous-section (4.1) rétrécie par rapport à la zone métrique et la seconde sous-section (4.2) s'y raccordant et se rétrécissant encore par rapport à la première sous-section (4.1).

9. Ebauche (2) pour la fabrication d'une vis selon une des revendications 1 à 7, comprenant une tige (22) à pourvoir d'un filetage, **caractérisée en ce que** la tige (22) présente une zone de tige se rétrécissant (23) en direction de son extrémité, la zone de tige se rétrécissant (23) étant divisée en une première et une deuxième sous-sections (24, 25), la première sous-section (24) étant disposée en direction de la zone non rétrécie de la tige (22) et la seconde sous-section (25) étant disposée au niveau de la première sous-section (24) en direction de la pointe de l'ébauche et que les deux sous-sections sont de forme conique, l'angle conique étant dirigé vers la pointe de l'ébauche et étant décrits pour la première sous-section un angle de 7° à 20° et un angle de 10° à 40° pour la seconde sous-section.
